# EUROPÄISCHE PATENTSCHRIFT

(11) **EP 2 479 534 B1**
(45) Veröffentlichungstag und Bekanntmachung des Hinweises auf die Patenterteilung: **12.12.2012**
(21) Anmeldenummer: 11184688.7
(22) Anmeldetag: 11.10.2011
(51) Int. Cl.: G01B 11/02, G01C 3/08

(54) **Optoelektronischer Sensor**
Optoelectronic sensor
Capteur optoelectrique

(30) Priorität: 22.01.2011 DE 202011001808 U
(43) Veröffentlichungstag der Anmeldung: 25.07.2012
(73) Patentinhaber: Sick AG, 79183 Waldkirch (DE)
(72) Erfinder: Russ, Thomas, 79211 Denzlingen (DE)
(74) Vertreter: Hehl, Ulrich

(56) Entgegenhaltungen:
- EP-A1- 1 136 787
- EP-A2- 0 419 082
- DE-A1- 4 238 891
- DE-A1- 10 301 094

## Beschreibung

Die Erfindung betrifft einen optoelektronischen Sensor mit einem Lichtsender und einem Lichtempfänger zum Abbilden eines Objekts sowie ein Verfahren zum Abbilden eines Objekts mit treuem Abbildungsmaßstab nach dem Oberbegriff von Anspruch 1 beziehungsweise 11.

Kamerabasierte Sensoren verwenden Bildsensoren mit einer Vielzahl von zu einer Zeile oder Matrix angeordneten Pixeln. Mit Hilfe einer integrierten Beleuchtung wird ein Objektbereich ausgeleuchtet und je nach Sensor und Anwendung ein flächiges zweidimensionales oder ein zeilenförmiges Bild aufgenommen und ausgewertet. Damit werden beispielsweise Objekte oder Kanten erkannt oder ihre Geometrie vermessen.

Bei Kamerasensoren am verbreitetsten ist die Verwendung entozentrischer Objektive. Wie beim menschlichen Auge ändert sich dabei der Abbildungsmaßstab der Objekte mit deren Objektabstand. Ein fernes Objekt erscheint demnach auf dem Bildsensor kleiner als ein nahes Objekt identischer Abmessung. Möchte man mit einem solchen Kamerasensor Objekte vermessen, so ist deshalb genau darauf zu achten, sie in einem vorgegebenen Abstand, der Nenntastweite, zu halten. Damit sind starke Rahmenbedingungen aufgestellt, welche die Flexibilität von Kamerasensoren in solchen Vermessungsanwendungen erheblich einschränken.

Es ist bekannt, anstelle eines entozentrischen Objektivs ein objektseitig telezentrisches Objektiv zu verwenden. Dieses hat die Eigenschaft, dass keine perspektivischen Größenunterschiede auftreten, sich der Abbildungsmaßstab also nicht mit dem Objektabstand ändert. Das telezentrische Objektiv sorgt dann für einen Toleranzbereich um die Nenntastweite innerhalb des begrenzten Schärfentiefebereichs. Telezentrische Objektive benötigen aber eine sehr große Baulänge des Sensors und haben nur eine geringe Intensitätsübertragung.

Die EP 1 136 787 B1 wählt wegen der genannten Nachteile der telezentrischen Abbildung den Weg, ein entozentrisches Objektiv einzusetzen und in einer nachträglichen Auswertung den Abbildungsmaßstab in Abhängigkeit des Objektabstands zu korrigieren. Dafür muss der Objektabstand gemessen werden. In dem Sensor nach EP 1 136 787 B1 ist deshalb ein zusätzlicher Lichtsender in einem Winkel zum Bildsensor angeordnet, der einen Kompensationslichtstrahl erzeugt, mit dessen Hilfe der Objektabstand trianguliert wird. Der zusätzliche Lichtsender beansprucht aber zusätzlichen Bauraum, der wegen der Triangulationsanordnung zu einem deutlich vergrößerten Sensor führt.

Im Stand der Technik sind außer der in EP 1 136 787 B1 verwendeten Triangulation verschiedene Verfahren zur Abstandsmessung bekannt. Dazu zählen puls- oder phasenbasierte Lichtlaufzeitverfahren und Lichtschnittverfahren. Die DE 103 01 094 A1 beschreibt eine Vorrichtung zur zweidimensionalen Abstandsmessung mit einer Kamera zur Aufnahme von Bildern. Zur Beleuchtung sind eine primäre und eine sekundäre Lichtquelle vorgesehen, deren Lichtbündel gezielt unterschiedlich gewählt wird, beispielsweise eines divergent und das andere konvergent. Aus Unterschieden der Beleuchtungsintensität bei Beleuchtung mit jeweils nur einer Lichtquelle wird dann auf den Objektabstand geschlossen. Durch die unterschiedlich fokussierten Lichtquellen entstehen nahezu im gesamten Überwachungsbereich unterschiedliche Energiedichten, so dass an allen Orten Abstandsinformationen bestimmt werden können. Die Beleuchtung der DE 103 01 094 A1 erzielt aber nur eine vergleichsweise geringe Energiedichte mit entsprechend geringer Reichweite und hoher Rauschempfindlichkeit.

Aus der EP 0 419 082 A2 ist eine optische Messvorrichtung bekannt, welche die Entfernung eines Objekts anhand von Intensitätsunterschieden bestimmt. Abstandsabhängige unterschiedliche Intensitäten werden durch Unterschiede in zwei Lichtquellen in diversen Ausführungsformen erzielt: durch eine Punkt- und eine Flächenbeleuchtung, durch unterschiedliche Abstände, unterschiedliche Öffnungswinkel oder unterschiedliche Wellenlängen.

Die DE 42 38 891 A1 offenbart ein Kamerasystem mit integrierter Entfernungsmesseinrichtung. Dabei wird ein Meßstrahl über eine spezielle optische Baugruppe entlang der optischen Achse der Kamera eingekoppelt, und mittels einer seitlich angebrachten positionsempfindlichen Diode wird aus dem Meßstrahl der Objektabstand trianguliert.

Es ist daher Aufgabe der Erfindung, einen einfacheren kamerabasierten Sensor mit treuem Abbildungsmaßstab und entozentrischem Objektiv aufzufinden.

Diese Aufgabe wird durch einen optoelektronischen Sensor mit einem Lichtsender und einem Lichtempfänger zum Abbilden eines Objekts und ein Verfahren zum Abbilden eines Objekts mit treuem Abbildungsmaßstab gemäß Anspruch 1 beziehungsweise Anspruch 11 gelöst. Dabei geht die Lösung von dem Grundgedanken aus, zunächst Bilddaten durch eine entozentrische Empfängeroptik mit abstandsabhängigem Abbildungsmaßstab aufzunehmen und den Abbildungsmaßstab anschließend anhand des gemessenen Objektabstands zu korrigieren. Dabei wird zur Abstandsbestimmung die vorhandene aktive Beleuchtung des Sensors verwendet. Sie erzeugt durch mehrere Lichtquellen eine strukturierte Beleuchtung, und aus den Intensitätsunterschieden bei Beleuchtung mit unterschiedlichen Lichtquellen wird auf den Objektabstand rückgeschlossen.

Die Erfindung hat den Vorteil, dass keine aufwändige Optik, wie eine telezentrische Optik, notwendig ist. Die ohnehin vorgesehene Beleuchtung dient zugleich der Abstandsmessung. Ein zusätzlicher Kompensationslichtstrahl oder dergleichen ist deshalb nicht mehr erforderlich. Dies führt zu einem vereinfachten und deutlich baukleineren Sensor. Die strukturierte Beleuchtung erzeugt eine hohe Energiedichte gezielt am Erfassungsort der Objekte und damit eine hohe Energieeffizienz und Empfindlichkeit des Sensors.

Dem Lichtsender ist erfindungsgemäß eine anamorphotische Sendeoptik zur Erzeugung einer Linienbeleuchtung aus dem Licht der Lichtquellen vorgeordnet. Diese Sendeoptik ist demnach eine gemeinsame Sendeoptik für alle Lichtquellen, so dass deren Lichtstrahl in gleicher Weise geformt wird. Eine anamorphotische Optik bildet in der einen Achse anders ab als in der anderen Achse, indem beispielsweise in der einen Achse keine Veränderung und in der anderen Achse eine Stauchung stattfindet. Dadurch entsteht ein langgezogener Lichtfleck, der zusätzlich noch durch eine Schlitzblende zu einer Linie geformt werden kann. Dabei bleiben aber durch die nur teilweise Überlappung der Lichtquellen lokale Intensitätsunterschiede erhalten. Die anamorphotische Optik weist zur Erzeugung einer Linie beispielsweise eine oder mehrere Zylinderlinsen auf. Vorzugsweise wird eine solche Beleuchtung mit einer Zeilenkamera kombiniert, bei der also die Pixel des Lichtempfängers zu einer Zeile oder zumindest einer langgestreckten Matrix angeordnet sind.

Die Empfängeroptik weist bevorzugt eine anamorphotische Optik auf. Dies ist das Gegenstück zu einer entsprechenden sendeseitigen Optik, um die Objekte auf einen zeilenförmigen Lichtempfänger beziehungsweise Bildsensor abzubilden. Auch die Empfängeroptik lässt sich beispielsweise mit einer oder mehreren Zylinderlinsen realisieren.

Vorzugsweise ist ein Strahlteiler vorgesehen, so dass zumindest eine Zylinderlinse von Lichtsender und Lichtempfänger gemeinsam nutzbar ist. Der Strahlteiler knickt dabei die optische Achse des Lichtsenders oder des Lichtempfängers, so dass diese beiden optischen Achsen vor dem Strahlteiler in der gemeinsamen optischen Achse des Sensors zusammenfallen. Damit werden optische Elemente in dem gemeinsamen Pfad sowohl sendeseitig als auch empfangsseitig genutzt, während mögliche weitere individuelle Elemente hinter dem Strahlteiler für unterschiedliche optische Eigenschaften im Sende- und Empfangspfad sorgen können.

Der Empfangskanal ist bevorzugt mittels eines Spiegelelements gefaltet. Damit ist gemeint, dass die optische Achse des Lichtempfängers an dem Spiegelelement geknickt wird, so dass der Lichtempfänger quer zur Hauptachse des Sensors ausgerichtet werden kann und somit eine kürzere Baulänge möglich wird.

Die optischen Achsen der Lichtquellen sind bevorzugt zu der optischen Achse des Sensors versetzt. Prinzipiell genügt es auch, wenn nur eine der Lichtquellen einen solchen Versatz aufweist. In beiden Fällen sorgt der Versatz für die Intensitätsunterschiede, welche die Abstandsmesseinrichtung zur Bestimmung des Objektabstands auswertet.

Die Abbildungsmaßstabskorrektureinheit ist bevorzugt dafür ausgebildet, den Abbildungsmaßstab einer Nenntastweite als Referenz zu verwenden und Korrekturen des Abbildungsmaßstabs anhand einer Abweichung zwischen Abstand und Nenntastweite vorzunehmen. Der Sensor ist damit grundsätzlich auf die Nenntastweite eingestellt. Wird ein abweichender Abstand gemessen, so wird eine Korrektur des Abbildungsmaßstabs vorgenommen, etwa durch einen Skalierungsfaktor. Der passende Abbildungsmaßstab zu jedem Abstand steht per Design des Sensors fest und kann somit beispielsweise berechnet, ab Werk festgelegt oder vor dem Betrieb eingelernt und in einem Speicher des Sensors abgelegt werden.

Die Abstandsmesseinrichtung ist bevorzugt dafür ausgebildet, die jeweilige Intensität des Beleuchtungsbereichs bei zeitversetzter Aktivierung jeweils einer Lichtquelle zu bestimmen. Dadurch wird auf einfache Weise festgestellt, welcher Anteil der ortsabhängigen Intensitätsverteilung auf welche Lichtquelle zurückzuführen ist.

Vorzugsweise ist die Abstandsmesseinrichtung dafür ausgebildet, den Abstand aus dem Quotienten der Beleuchtungsintensität der ersten Lichtquelle und der Beleuchtungsintensität der zweiten Lichtquelle zu bestimmen. Dieser Quotient kann dabei für jedes Pixel des Lichtempfängers gebildet werden und bildet dann eine Messkurve, die charakteristisch für einen bestimmten Objektabstand ist.

In der Abstandsmesseinrichtung sind bevorzugt Kennlinien des Quotienten über dem Ort auf dem Lichtempfänger für verschiedene Objektabstände gespeichert, und die Abstandsbestimmung erfolgt anhand eines Vergleichs der Kennlinien und des gemessenen Quotienten. Die im vorigen Absatz genannte Messkurve wird somit mit bekannten Kennlinien verglichen und dann dem passenden Objektabstand zugeordnet. Durch Interpolation wird dabei erforderlichenfalls auch eine höhere Auflösung erzielt als durch die Anzahl der gespeicherten Kennlinien vorgegeben.

Der Vergleich ist besonders bevorzugt auf einen Übergangsbereich des Lichtempfängers beschränkt, in dem die Intensität zumindest einer Lichtquelle abfällt. Der Übergangsbereich liegt üblicherweise am Rande des Beleuchtungsbereichs von einer der Lichtquellen. Dort sind dann die Intensitätsunterschiede besonders hoch, so dass mit nur vergleichsweise wenigen Datenpunkten der Abstand genau bestimmbar ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines erfindungsgemäßen Sensors;
- Fig. 2a: eine vereinfachte Darstellung von Lichtsender, Lichtempfänger und Optik des Sensors gemäß Figur 1 zur Erläuterung des Strahlengangs; und
- Fig. 2b: eine schematische Darstellung des in Abhängigkeit vom Ort auf dem Lichtempfänger aufgetragenen Intensitätsquotienten der beiden Lichtquellen auf einem angetasteten Objekt in verschiedenen Objektabständen.

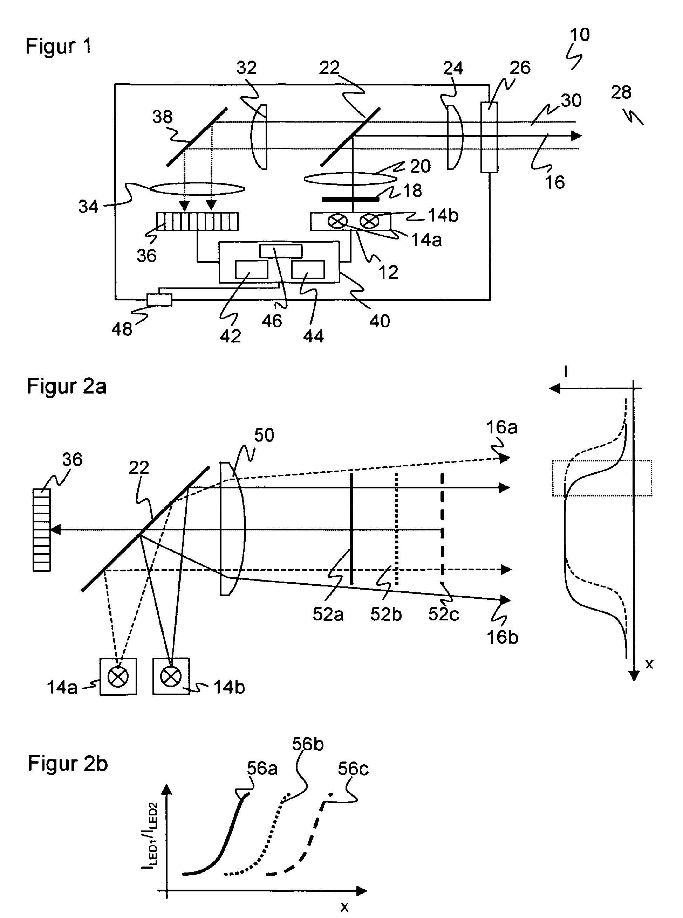

Figur 1 zeigt eine schematische Schnittdarstellung eines erfindungsgemäßen Sensors 10. In einem Sendepfad des Sensors 10 sendet ein Lichtsender 12 mit zwei Lichtquellen 14a-b, beispielsweise LEDs, ein Sendelichtbündel 16 aus, das durch eine beispielsweise zeilenförmige Blende 18 und eine Zylinderlinse 20 auf einen Strahlteiler 22 fällt. Dabei bildet die Zylinderlinse 20 die ausgeleuchtete Blende 18 senkrecht zur Zeichenebene ab und bewirkt dabei eine Stauchung senkrecht zur Zeichenebene.

Nach der Umlenkung erfolgt in einer zweiten Zylinderlinse 24 eine weitere Stauchung des Sendelichtbündels 16 in der Zeichnungsebene und eine Spreizung in Vertikalrichtung. Die Sendeoptik aus der Blende 18 und den beiden Zylinderlinsen 20, 24 sorgt somit für einen langgestreckten, weitgehend linienförmigen Lichtfleck.

Damit entsteht eine anamorphotische Sendeoptik. Die Blende 18 wird in Querrichtung scharf abgebildet. In Längsrichtung erfolgt die Abbildung einerseits intrafokal, um eine homogene Ausleuchtung der Zeile zu gewährleisten, andererseits so kollimiert wie möglich, um eine hohe Leistungsdichte zu erreichen. Dabei bleiben jedoch die Sendekeulen der einzelnen Lichtquellen 14a-b noch zu erkennen und überlappen sich nur zum Teil. Dies wird in der weiter unten noch zu beschreibenden Abstandsbestimmung ausgenutzt.

Das somit im Querschnitt zu einer Linie geformte Sendelichtbündel 16 gelangt über ein Fenster 26 in einen Erfassungsbereich 28 des Sensors 10, um dort zu erfassende Objekte zu beleuchten. Empfangslicht 30 von einem solchen Objekt, das sowohl remittiertes Sendelicht 16 als auch Umgebungslicht sein kann, fällt durch das Fenster 26, die Zylinderlinse 24 und den Strahlteiler 22 in einen Empfangspfad des Sensors 10. Dort sind weitere Zylinderlinsen 32, 34 vorgesehen, die gemeinsam mit der Zylinderlinse 24 eine anamorphotische Empfangsoptik eines zeilenförmigen Lichtempfängers 36 mit einer Vielzahl von lichtempfindlichen Pixeln bilden. Ein Spiegel 38 sorgt für einen gefalteten Strahlengang, so dass die Baulänge des Sensors 10 verkürzt wird. Bei der Empfangsabbildung wird mit einer kleinen Brennweite in Richtung quer zu der Zeile eine möglichst hohe Energiedichte erzeugt, während in Richtung längs der Zeile durch eine große Brennweite eine möglichst hochauflösende Abbildung erzielt wird.

Die in Figur 1 gezeigte konkrete Ausführung einer anamorphotischen Sende- und Empfangsoptik ist beispielhaft zu verstehen. Es können mehr oder weniger, andersartige und anders angeordnete Linsen und optische Elemente verwendet werden. Auch die Faltungen durch Strahlteiler 22 oder Spiegel 38 sind lediglich bevorzugt, um eine kompakte Anordnung zu erreichen. Es sind aber auch alternative Anordnungen ohne derartige Elemente möglich. Erforderlich ist lediglich eine strukturierte Beleuchtung mit Intensitätsunterschieden, wie sie beispielsweise durch einen axialen Versatz der optischen Achsen der Lichtquellen 14a-b gegenüber der optischen Achse des Sensors 10 erreicht werden.

Der Lichtempfänger 36 erzeugt ein entsprechend seiner Pixel ortsaufgelöstes Empfangssignal, welches in einer Auswertungseinheit 40 weiterverarbeitet wird. Die Auswertungseinheit 40 umfasst zugleich die Steuerungsfunktionalität des Sensors 10 und ist auch mit dem Lichtsender 12 verbunden. Als einige Elemente der Auswertungseinheit 40 sind in Figur 1 eine Abstandsmesseinrichtung 42, eine Abbildungsmaßstabkorrektureinrichtung 44 und ein Speicher 46 gezeigt, deren Funktion sogleich im Zusammenhang mit Figur 2 erläutert wird. Die Informationen über ein erfasstes Objekt, welche die Auswertungseinheit 40 mit Hilfe des Empfangssignal auffindet, werden über einen Ausgang 48 ausgegeben, beispielsweise Abmessungen, Kantenlagen oder Positionen eines Objekts, oder auch ein binäres Schaltsignal in Abhängigkeit davon, ob gegenwärtig ein Objekt mit bestimmten Eigenschaften erfasst ist oder nicht.

Figur 2a zeigt in einer schematischen Schnittdarstellung zur besseren Übersicht nur einige Elemente des Sensors 10, nämlich die Lichtquellen 14a-b, den Strahlteiler 22 und den Lichtempfänger 36. Die Sende- und Empfangsoptik wird stark vereinfacht durch nur eine einzige Linse 50 repräsentiert. Die beiden Lichtquellen 14a-b der integrierten Beleuchtung des Sensors 10 sind so angeordnet beziehungsweise die Sendeoptik so ausgebildet, dass sich das Verhältnis der von dem Lichtempfänger 36 detektierten optischen Intensitäten oder Leistungen der jeweiligen Lichtquellen 14a-b zumindest an einer bestimmten Stelle auf dem Lichtempfänger 36 mit dem Objektabstand ändert.

Dazu sind in Figur 2a die Sendelichtbündel 16a-b der beiden Lichtquellen 14a-b einzeln einmal mit durchgezogenen und einmal mit gestrichelten Linien eingezeichnet. Ganz rechts in Figur 2a sind mit entsprechender Liniengestaltung, also einer gestrichelten Linie für den die erste Lichtquelle 14a und einer durchgezogenen Linie für die zweite Lichtquelle 14b, die Intensitäten I der Lichtquellen 14a-b auf einem Objekt 52a-c in Abhängigkeit von der Lage x auf dem Lichtempfänger 36 aufgetragen. Dabei überlappen sich die möglichst kollimierten Sendelichtbündel 16a-b objekt- wie empfängerseitig nur teilweise. Durch zeitversetzte Ansteuerung der Lichtquellen 14a-b kann die Auswertungseinheit 40 die Intensitätsanteile der einzelnen Lichtquellen 14a-b gesondert bestimmen. Ein ganz entsprechendes Bild ergibt sich bei der Verwendung zusätzlicher Lichtquellen.

Vor allem in einem Übergangsbereich 54 am Rand des Beleuchtungsbereichs von einer der Lichtquellen 14a-b, wo sich in der einen Richtung die Sendelichtbündel 16a-b überlappen und in der anderen Richtung nicht mehr, ändert sich das Verhältnis der Intensitäten oder optischen Leistungen der beiden Lichtquellen 14a-b. Dabei ergibt sich ein unterschiedliches Verhältnis je nachdem, in welchem Objektabstand ein Objekt 52a-c erfasst wird. In Figur 2a sind drei Objekte 52a-c mit unterschiedlicher Liniengestaltung eingezeichnet.

Das Intensitätsverhältnis in dem Übergangsbereich 54 ist in Figur 2b rein schematisch und ohne Zahlenwerte an den Achsen über der Lage x auf dem Lichtempfänger aufgetragen. Dabei entsteht für unterschiedliche Objektabstände der Objekte 52a-c jeweils eine eigene Kennlinie 56a-c, deren Liniengestaltung in Figur 2b dem zugehörigen Objekt 52a-c in Figur 2a entspricht.

Die Abstandsmesseinrichtung 42 vergleicht nun das aktuell in dem Übergangsbereich 54 erfasste Intensitätsverhältnis mit den im Speicher 46 abgelegten bekannten Kennlinien 56a-c zu verschiedenen Objektabständen und findet auf diese Weise die passende Kennlinie 56a-c und den dazugehörigen Objektabstand. Durch Interpolation können auch Objektabstände zwischen zwei bekannten Kennlinien 56a-c gemessen werden.

Den somit gemessenen Objektabstand verwendet dann die Abbildungsmaßstabkorrektureinheit 44, um den Abbildungsmaßstab zu reskalieren. Die notwendigen Skalierungsfaktoren können beispielsweise gemeinsam mit den Kennlinien 56a-c in dem Speicher 46 abgelegt sein. Durch diese Abstandskorrektur wird trotz entozentrischer Empfangsoptik ein treuer Abbildungsmaßstab unabhängig vom Objektabstand erreicht.

## Patentansprüche

1. Optoelektronischer Sensor (10) mit einem Lichtsender (12) und einem Lichtempfänger (36) zum Abbilden eines Objekts (52), der eine Vielzahl zu einer Zeile oder einer Matrix angeordnete Pixel aufweist und dem eine entozentrische Empfängeroptik (24, 32, 34) vorgeordnet ist, wobei eine Abstandsmesseinrichtung (42) für die Bestimmung eines Abstands zwischen Sensor (10) und Objekt (52) und eine Abbildungsmaßstabskorrektureinheit (44) vorgesehen ist, mittels derer der Abbildungsmaßstab des Objekts (52) in Abhängigkeit des Abstands korrigierbar ist,
**dadurch gekennzeichnet,**
**dass** der Lichtsender (12) mindestens eine erste Lichtquelle (14a) und eine zweite Lichtquelle (14b) aufweist, deren Beleuchtungsbereiche teilweise überlappen, so dass auf dem Objekt (52) ein gemeinsamer Beleuchtungsbereich mit ortsabhängigen Intensitätsunterschieden entsteht, dass dem Lichtsender eine gemeinsame anamorphotische Sendeoptik (20, 24) für alle Lichtquellen (14a-b) zur Erzeugung einer Linienbeleuchtung aus dem Licht (16) der Lichtquellen (14) vorgeordnet ist, und dass die Abstandsmesseinrichtung (42) dafür ausgebildet ist, den Abstand aus den Intensitätsunterschieden zu bestimmen.

2. Sensor (10) nach Anspruch 1,
wobei die anamorphotische Sendeoptik (20, 24) eine oder mehrere Zylinderlinsen aufweist.

3. Sensor (10) nach einem der vorhergehenden Ansprüche,
wobei die Empfängeroptik (24, 32, 34) eine anamorphotische Optik aufweist, insbesondere mit einer oder mehreren Zylinderlinsen.

4. Sensor (10) nach Anspruch 2 und 3,
wobei ein Strahlteiler (22) vorgesehen ist, so dass zumindest eine Zylinderlinse (24) von Lichtsender (12) und Lichtempfänger (36) gemeinsam nutzbar ist.

5. Sensor (10) nach einem der vorhergehenden Ansprüche,
wobei der Empfangskanal mittels eines Spiegelelements (38) gefaltet ist.

6. Sensor (10) nach einem der vorhergehenden Ansprüche,
wobei die optischen Achsen der Lichtquellen (14a-b) zu der optischen Achse des Sensors (10) versetzt sind.

7. Sensor (10) nach einem der vorhergehenden Ansprüche,
wobei die Abbildungsmaßstabskorrektureinheit (44) dafür ausgebildet ist, den Abbildungsmaßstab einer Nenntastweise als Referenz zu verwenden und Korrekturen des Abbildungsmaßstabs anhand einer Abweichung zwischen Abstand und Nenntastweite vorzunehmen, wobei die Korrekturen insbesondere in einem Speicher (46) abgelegt und/oder vor dem Messbetrieb eingelernt sind.

8. Sensor (10) nach einem der vorhergehenden Ansprüche,
wobei die Abstandsmesseinrichtung (42) dafür ausgebildet ist, die jeweilige Intensität des Beleuchtungsbereichs bei zeitversetzter Aktivierung jeweils einer Lichtquelle (14a-b) zu bestimmen.

9. Sensor (10) nach einem der vorhergehenden Ansprüche,
wobei die Abstandsmesseinrichtung (42) dafür ausgebildet ist, den Abstand aus dem Quotienten der Beleuchtungsintensität der ersten Lichtquelle (14a) und der Beleuchtungsintensität der zweiten Lichtquelle (14b) zu bestimmen.

10. Sensor (10) nach einem der vorhergehenden Ansprüche,
wobei in der Abstandsmesseinrichtung (42) Kennlinien (56) des Quotienten über dem Ort auf dem Lichtempfänger (36) für verschiedene Objektabstände gespeichert sind und die Abstandsbestimmung anhand eines Vergleichs der Kennlinien (56) und des gemessenen Quotienten erfolgt, wobei der Vergleich insbesondere auf einen Übergangsbereich (54) des Lichtempfängers (36) beschränkt ist, in dem die Intensität zumindest einer Lichtquelle (14a-b) abfällt.

11. Verfahren zum Abbilden eines Objekts (52) mit treuem Abbildungsmaßstab,
wobei das Objekt beleuchtet und auf einem Lichtempfänger mit einer Vielzahl zu einer Zeile oder einer Matrix angeordneter Pixel durch eine entozentrische Empfängeroptik (24, 32, 34) abgebildet, der Abstand zu dem Objekt (52) bestimmt und der Abbildungsmaßstab des Objekts (52) in Abhängigkeit des Abstands korrigiert wird,
**dadurch gekennzeichnet,**
**dass** das Objekt von mindestens einer ersten Lichtquelle (14a) und einer zweiten Lichtquelle (14b) beleuchtet wird, deren Beleuchtungsbereiche teilweise überlappen, so dass auf dem Objekt (52) ein gemeinsamer Beleuchtungsbereich mit ortsabhängigen Intensitätsunterschieden entsteht, dass eine gemeinsame anamorphotische Sendeoptik (20, 24) für alle Lichtquellen (14a-b) aus dem Licht (16) der Lichtquellen (14) eine Linienbeleuchtung erzeugt, und dass der Abstand aus den Intensitätsunterschieden bestimmt wird.

## Claims

1. An optoelectronic sensor (10) having a light transmitter (12) and a light receiver (36) for imaging an object (52), the light receiver (36) comprising a plurality of pixels arranged in a row or a matrix and entocentric receiving optics (24, 32, 34) being arranged in front of the light receiver (36), wherein a distance measuring unit (42) for determining a distance between sensor (10) and object (52) and an imaging scale correction unit (44) for correcting the imaging scale of the object (52) in dependence on the distance are provided,
**characterized in that**
the light transmitter (12) comprises at least a first light source (14a) and a second light source (14b) whose illumination areas partially overlap, so that a common illumination area with position dependent differences in intensity is generated on the object (52), **in that** common anamorphic transmission optics (20, 24) for all light sources (14a-b) are arranged in front of the light transmitter in order to generate a line illumination from the light (16) of the light sources (14a-b), and **in that** the distance measuring unit (42) is configured to determine the distance from the differences in intensity.

2. Sensor (10) according to claim 1,
wherein the anamorphic transmission optics (20, 24) comprise one or more cylindrical lenses.

3. Sensor (10) according to any of the preceding claims,
wherein the receiving optics (24, 32, 34) comprise anamorphic optics, in particular one or more cylindrical lenses.

4. Sensor (10) according to claim 2 or 3,
wherein a beam splitter (22) is provided so that at least one cylindrical lens (24) is commonly usable by light transmitter (12) and light receiver (36).

5. Sensor (10) according to any of the preceding claims,
wherein the reception channel is folded by means of a mirror element (38).

6. Sensor (10) according to any of the preceding claims,
wherein the optical axes of the light sources (14a-b) are offset with respect to the optical axis of the sensor (10).

7. Sensor (10) according to any of the preceding claims,
wherein the imaging scale correction unit (44) is configured to use the imaging scale of a specified scanning distance as a reference and to make corrections of the imaging scale base on a deviation between distance and specified scanning distance, wherein the corrections in particular are stored in a memory (46) and/or are taught before the measurement operation.

8. Sensor (10) according to any of the preceding claims,
wherein the distance measuring unit (42) is configured to determine the respective intensity of the illumination area for a time-shifted activation of one respective light source (14a-b).

9. Sensor (10) according to any of the preceding claims,
wherein the distance measuring unit (42) is configured to determine the distance from the quotient of the illumination intensity of the first light source (14a) and the illumination intensity of the second light source (14b).

10. Sensor (10) according to any of the preceding claims,
wherein characteristic curves (56) of the quotient versus the position on the light receiver (36) are stored in the distance measuring unit (42) for different object distances, and the distance determination is done based on a comparison of the characteristic curves (56) and the measured quotient, wherein the comparison in particular is limited to a transition area (54) of the light receiver (36) where the intensity of at least one light source (14a-b) falls off.

11. A method for imaging an object (52) with faithful imaging scale, wherein the object is illuminated and imaged by entocentric optics (24, 32, 34) on a light receiver having a plurality of pixels arranged in a row or a matrix, the distance to the object (52) is determined, and the imaging scale of the object (52) is corrected in dependence on the distance,
**characterized in that**
the object is illuminated by at least a first light source (14a) and a second light source (14b) whose illumination areas partially overlap, so that a common illumination area with position dependent differences in intensity is generated on the object (52), **in that** common anamorphic transmission optics (20, 24) for all light sources (14a-b) generate a line illumination from the light (16) of the light sources (14a-b), and **in that** the distance is determined from the differences in intensity.

## Revendications

1. Capteur optoélectronique (10) avec un émetteur de lumière (12) et un récepteur de lumière (36) pour former l'image d'un objet (52) qui comprend une pluralité de pixels agencés pour donner une ligne ou une matrice, et devant lequel est placée une optique de réception (24, 32, 34) entocentrique, dans lequel il est prévu un dispositif de mesure de distance (42) pour la détermination d'une distance entre le capteur (10) et l'objet (52), et une unité de correction d'échelle d'imagerie (44), au moyen de laquelle l'échelle d'imagerie de l'objet (52) est susceptible d'être corrigée en fonction de la distance,
**caractérisé en ce que**
l'émetteur de lumière (12) comprend au moins une première source de lumière (14a) et une seconde source de lumière (14b), dont les plages d'éclairage se chevauchent partiellement, de telle sorte qu'il apparaît sur l'objet (52) une zone d'éclairage commune avec des différences d'intensité dépendant du lieu, **en ce qu'**une optique d'émission anamorphotique (20, 24) commune pour toutes les sources de lumière (14a-b) pour engendrer un éclairage en ligne à partir de la lumière (16) des sources de lumière (14) est disposée en avant de l'émetteur de lumière, et **en ce que** le dispositif de mesure de distance (42) est réalisé pour déterminer la distance à partir des différences d'intensité.

2. Capteur (10) selon la revendication 1,
dans lequel l'optique d'émission anamorphotique (20, 24) comprend une ou plusieurs lentilles cylindriques.

3. Capteur (10) selon l'une des revendications précédentes,
dans lequel l'optique de réception (24, 32, 34) comprend une optique anamorphotique, en particulier avec une ou plusieurs lentilles cylindriques.

4. Capteur (10) selon la revendication 2 et 3,
dans lequel il est prévu un diviseur de rayonnement (22), de sorte qu'au moins une lentille cylindrique (24) est utilisable en commun par l'émetteur de lumière (12) et le récepteur de lumière (36).

5. Capteur (10) selon l'une des revendications précédentes,
dans lequel le canal de réception est replié au moyen d'un élément à miroir (38).

6. Capteur (10) selon l'une des revendications précédentes,
dans lequel les axes optiques des sources de lumière (14a-b) sont décalés vers l'axe optique du capteur (10).

7. Capteur (10) selon l'une des revendications précédentes,
dans lequel l'unité de correction d'échelle d'imagerie (44) est réalisée pour utiliser comme référence l'échelle d'imagerie d'un pas de palpage nominal, et pour procéder à des corrections de l'échelle imagerie au moyen d'un écart entre la distance et d'un pas de palpage nominal, dans lequel les corrections sont déposées en particulier dans une mémoire (46) et/ou apprises avant le fonctionnement en mesure.

8. Capteur (10) selon l'une des revendications précédentes,
dans lequel le dispositif de mesure de distance (42) est réalisé pour déterminer l'intensité respective de la plage d'éclairage lors d'une activation d'une source de lumière respective (14a-b) de manière décalée dans le temps.

9. Capteur (10) selon l'une des revendications précédentes,
dans lequel le dispositif de mesure de distance (42) est réalisé pour déterminer la distance à partir du quotient de l'intensité d'éclairage de la première source de lumière (14a) sur l'intensité d'éclairage de la seconde source de lumière (14b).

10. Capteur (10) selon l'une des revendications précédentes,
dans lequel, dans le dispositif de mesure de distance (42) sont mémorisées des lignes caractéristiques (56) du quotient sur le lieu sur le récepteur de lumière (36) pour différentes distances à l'objet, et la détermination de distance a lieu au moyen d'une comparaison des lignes caractéristiques (56) et du quotient mesuré, la comparaison étant limitée en particulier à une zone de transition (54) du récepteur de lumière (36) dans laquelle l'intensité, au moins d'une source de lumière (14a-b), diminue.

11. Procédé pour former l'image d'un objet (52) avec une échelle d'imagerie fidèle, dans lequel l'objet est éclairé et son image est formée sur un récepteur de lumière avec une pluralité de pixels agencés pour donner une ligne ou une matrice, au moyen d'une optique de réception entocentrique (24, 32, 34), on détermine la distance à l'objet (52), et l'échelle d'imagerie de l'objet (52) est corrigée en fonction de la distance,
**caractérisé en ce que**
l'objet est éclairé par au moins une première source de lumière (14a) et une seconde source de lumière (14b) dont les plages d'éclairage se chevauchent partiellement, de sorte qu'il se produit sur l'objet (52) une plage d'éclairage commune avec des différences d'intensité dépendant du lieu, **en ce qu'**une optique de réception anamorphotique (20, 24) engendre, pour toutes les sources de lumière (14a-b) à partir de la lumière (16) des sources de lumière (14), un éclairage linéaire, et **en ce que** l'on détermine la distance à partir des différences d'intensité.
